(19) Europäisches Patentamt
European Patent Office
Office européen des brevets

(11) **EP 4 760 660 A1**

(12) **DEMANDE DE BREVET EUROPEEN**

(43) Date de publication:
**17.06.2026 Bulletin 2026/25**

(21) Numéro de dépôt: **25220220.5**

(22) Date de dépôt: **02.12.2025**

(51) Classification Internationale des Brevets (IPC):
*G06V 40/10* (2022.01)　　*G06V 40/20* (2022.01)

(52) Classification Coopérative des Brevets (CPC):
**G06V 40/20; G06V 40/113;** G06V 40/11

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **11.12.2024 FR 2413873**

(71) Demandeur: **Orange**
**92130 Issy-les-Moulineaux (FR)**

(72) Inventeurs:
• **HOTEL, Olivier**
**92326 CHATILLON CEDEX (FR)**
• **ROUDET, Franck**
**92326 CHATILLON CEDEX (FR)**

(74) Mandataire: **Plasseraud IP**
**104 Rue de Richelieu**
**CS92104**
**75080 Paris Cedex 02 (FR)**

(54) **DÉTERMINATION D'UNE CONFIGURATION D'UNE STRUCTURE ARTICULÉE**

(57) Il est proposé un procédé mis en œuvre par ordinateur et comprenant :
une détermination d'une configuration d'une structure articulée en tenant compte :
de positions de points clés de la structure articulée, et
d'au moins une relation topologique entre points clés.

[Fig. 3]

FIG. 3

EP 4 760 660 A1

## Description

### Domaine technique

La présente divulgation relève du domaine de l'analyse et de l'interprétation des données de structures articulées. Elle concerne plus précisément un procédé de détermination d'une configuration d'une structure articulée, un système, un programme d'ordinateur et un support d'enregistrement correspondants.

### Technique antérieure

Les systèmes existants de reconnaissance de configurations ou de gestes dynamiques reposent généralement sur des approches basées sur des données d'images ou de vidéos. Certaines approches utilisent des algorithmes d'intelligence artificielle tels que des réseaux de neurones convolutifs (CNN), des réseaux récurrents (RNN) ou des Transformers. Ces réseaux de neurones sont entraînés à détecter des gestes statiques dans des images, ou des gestes dynamiques dans des séquences ordonnées d'images. Ces approches, bien qu'efficaces dans certaines conditions, souffrent souvent d'un fort coût calculatoire et nécessitent des ressources matérielles importantes, ce qui limite leur adoption dans des environnements contraints.

D'autres approches exploitent des points clés extraits de la structure articulée pour représenter les configurations. Ces points clés sont utilisés sous forme de vecteurs ou de tenseurs et sont traités par des modèles tels que les perceptrons multicouches (MLP). Cependant, ces méthodes ne permettent pas toujours de reconnaître avec précision des configurations complexes ou des mouvements dynamiques.

Dans ce contexte, il existe un besoin pour une technique permettant de surmonter ces limitations, en offrant une reconnaissance précise et robuste des configurations et des mouvements dynamiques, tout en optimisant les ressources matérielles nécessaires.

### Résumé

La présente divulgation vient améliorer la situation.

Il est proposé, selon un aspect, un procédé mis en œuvre par ordinateur et comprenant : une détermination d'une configuration d'une structure articulée en tenant compte :

    de positions de points clés de la structure articulée, et
    d'au moins une relation topologique entre points clés.

Selon un autre aspect, il est proposé un système comprenant :

    un module de détermination d'une configuration d'une structure articulée en tenant compte : de positions de points clés de la structure articulée, et d'au moins une relation topologique entre points clés.

Selon un autre aspect, il est proposé un programme d'ordinateur comprenant des instructions qui, lorsque le programme est mis en œuvre par un processeur, conduisent à mettre en œuvre le procédé tel que défini dans les présentes. Selon un autre aspect, il est proposé un support d'enregistrement non transitoire, lisible par un ordinateur, sur lequel est enregistré un tel programme.

Le système, le programme d'ordinateur et le support d'enregistrement décrits sont aptes à mettre en œuvre tous les modes de réalisation du procédé décrit.

La technique proposée présente de nombreux avantages. Ainsi, elle peut contribuer, au moins dans certains modes de réalisation, à :

    une meilleure précision dans la reconnaissance des configurations complexes grâce à la prise en compte du voisinage topologique des points clés (c'est-à-dire des relations spatiales locales entre des points clés adjacents),
    une frugalité accrue en matière de ressources calculatoires, rendant la technique proposée adaptée aux environnements contraints ou en temps réel,
    une extensibilité pour des applications dynamiques, la technique proposée pouvant être répété dans le temps pour identifier des mouvements dynamiques de la structure articulée, et
    une compatibilité avec divers dispositifs de capture de données, tels que des caméras 2D ou 3D ou des systèmes de capture de mouvement, cette compatibilité facilitant une intégration large dans une variété de systèmes existants.

Les caractéristiques exposées dans les paragraphes suivants peuvent, optionnellement, être mises en œuvre, indépendamment les unes des autres ou en combinaison les unes avec les autres.

Dans au moins un mode de réalisation, les positions des points clés sont exprimées dans un premier système de coordonnées et l'au moins une relation topologique est exprimée dans un deuxième système de coordonnées.

Dans au moins un mode de réalisation, le premier système de coordonnées est un système de coordonnées cartésiennes et le deuxième système de coordonnées est un système de coordonnées polaires, cylindriques ou sphériques.

Dans au moins un mode de réalisation, la structure articulée comprend une main et un poignet.

Dans au moins un mode de réalisation, la structure articulée est divisée en une pluralité de sous-structures articulées, chaque sous-structure comprenant au moins une articulation et/ou au moins une extrémité.

Dans au moins un mode de réalisation, une relation topologique comprend une distance et/ou un angle.

Dans au moins un mode de réalisation, une relation topologique est au moins un élément d'une liste comprenant :

> une relation de proximité entre des points clés,
> une relation entre des points clés appartenant à une même sous-structure articulée, ou
> une relation entre des points clés appartenant à des sous-structures articulées distinctes.

Dans au moins un mode de réalisation, la configuration déterminée de la structure articulée est choisie parmi un ensemble discret de configurations possibles.

Dans au moins un mode de réalisation, la détermination de la configuration est répétée dans le temps, le procédé comprenant :

une détermination d'un mouvement dynamique de la structure articulée sur la base des configurations déterminées.

Dans au moins un mode de réalisation, la détermination du mouvement dynamique de la structure articulée comprend :

> une construction d'une séquence de symboles, un symbole représentant une configuration déterminée, et
> une détection d'un motif dans la séquence de symboles.

Dans au moins un mode de réalisation, la configuration de la structure articulée est déterminée à l'aide d'un réseau de neurones convolutifs appliqué aux données obtenues.

Dans au moins un mode de réalisation, les données sont structurées sous une forme permettant de déduire au moins une relation topologique.

Dans au moins un mode de réalisation, le procédé comprend une détermination d'une commande utilisateur en fonction d'une similarité entre la configuration déterminée et une configuration associée à ladite commande.

## Brève description des dessins

D'autres caractéristiques, détails et avantages apparaîtront à la lecture de la description détaillée ci-après, et à l'analyse des dessins annexés, cités à titre de simples exemples non limitatifs, sur lesquels :

### Fig. 1

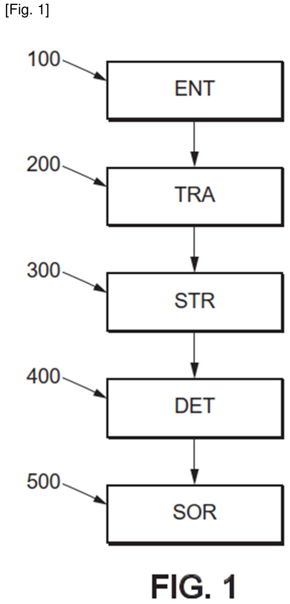

[Fig. 1] montre, dans un exemple de réalisation, un procédé de détermination d'une configuration d'une structure articulée.

### Fig. 2

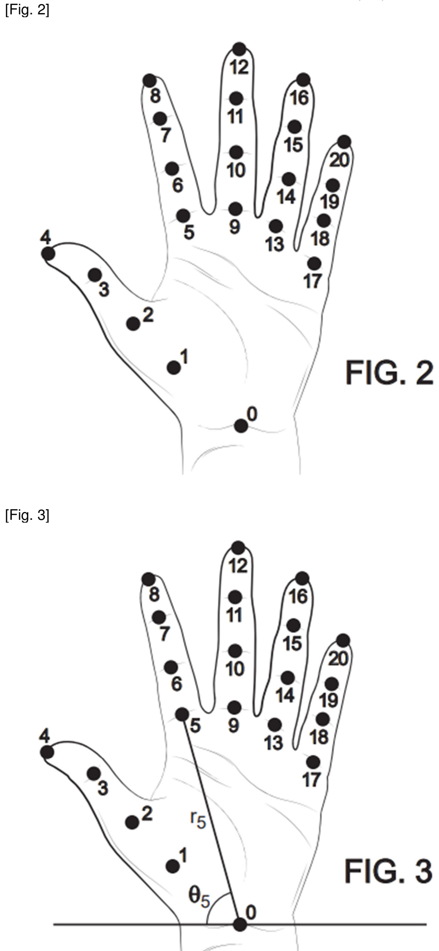

[Fig. 2] montre, dans un exemple de réalisation, une configuration statique d'une structure articulée.

### Fig. 3
[Fig. 3] montre, dans un exemple de réalisation, un résultat d'un changement de système de coordonnées appliqué aux points clés d'une structure articulée.

### Fig. 4

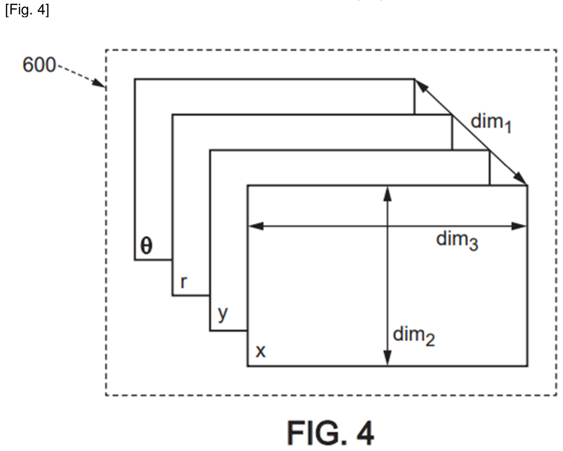

[Fig. 4] montre, dans un exemple de réalisation, un tenseur structurant des données de points clés.

### Fig. 5

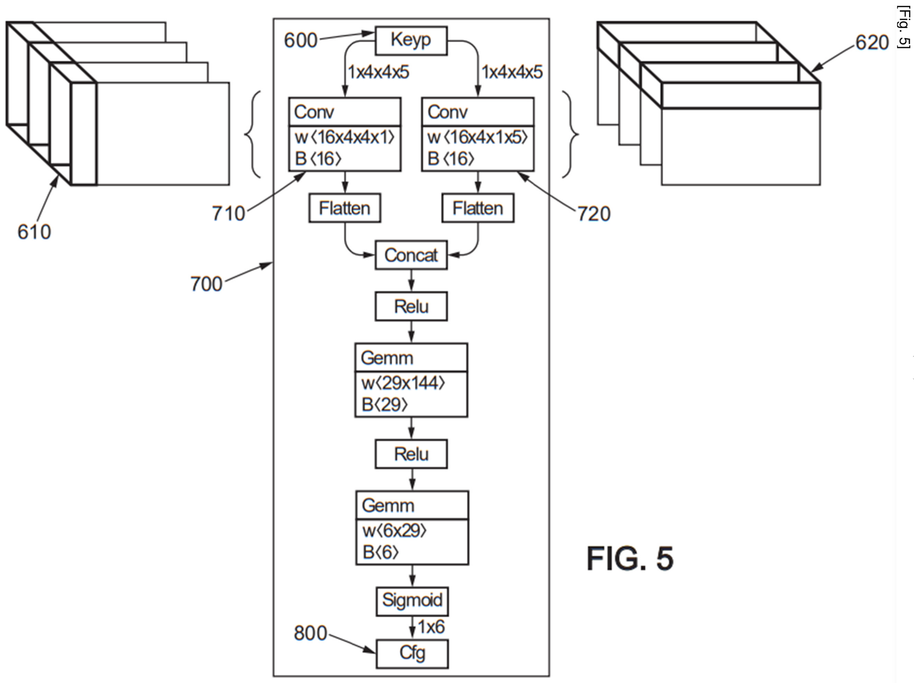

[Fig. 5] montre, dans un exemple de réalisation, un procédé de détermination d'une configuration d'une structure articulée.

### Fig. 6

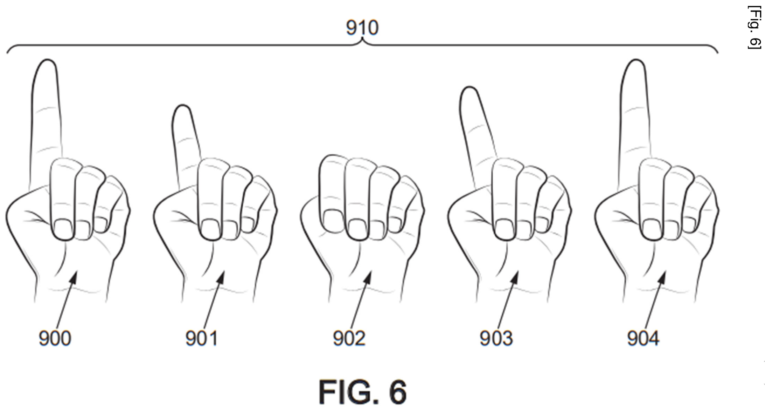

[Fig. 6] montre, dans un exemple de réalisation, une configuration dynamique d'une structure articulée.

## Description des modes de réalisation

Dans les dessins, des chiffres de référence identiques désignent des éléments identiques ou ayant des fonctions similaires.

Quelques termes spécifiques sont à présent clarifiés pour une meilleure compréhension de la technique proposée.

Une structure articulée est une entité composée de segments reliés par des articulations qui permettent des mouvements relatifs entre les segments. Par exemple, une main humaine est une structure articulée comprenant plusieurs sous-structures, telles que les doigts (chaque doigt est une sous-structure) et le poignet (point de référence commun pour l'ensemble par exemple). Une sous-structure articulée est une partie identifiable d'une structure articulée, comprenant au moins une articulation (ex. articulation du doigt) et/ou une extrémité (ex. extrémité du doigt).

Une configuration statique d'une structure articulée est une disposition ou une posture spécifique des segments de la structure articulée à un instant donné. Cette configuration est définie par les positions relatives des points clés de la structure articulée, exprimées notamment en fonction des relations spatiales (par exemple, distances, angles et/ou alignements) entre ces points clés. Pour une main humaine, une configuration statique peut correspondre par exemple à une main ouverte, un poing fermé, ou un doigt pointé. Dans le cas d'un doigt pointé, les articulations du doigt pointé sont alignées, tandis que celles des autres doigts sont repliées vers la paume. Pour une structure robotique, une configuration statique peut correspondre à une position de repos ou une posture adoptée pour accomplir une tâche précise (par exemple, un bras robotique étendu vers l'avant). Une configuration statique est immobile et ne varie pas dans le temps. Elle constitue une photographie de la structure articulée à un moment précis, sans tenir compte des mouvements qui peuvent la précéder ou la suivre.

Une configuration dynamique d'une structure articulée est une séquence de configurations statiques successives qui peuvent évoluer dans le temps et forment un mouvement ou un geste (une immobilité prolongée dans une même configuration statique pouvant être considérée dans certains modes de réalisation comme un geste). Une configuration dynamique se caractérise par la variation temporelle des positions des points clés et des relations spatiales qui les unissent. Pour une main humaine, une configuration dynamique peut correspondre à un mouvement de fermeture de la main (de la position ouverte vers un poing fermé). Une autre configuration dynamique peut être un geste d'approbation (lever le pouce depuis une main fermée). Pour une structure robotique, une configuration dynamique peut correspondre au déplacement d'un bras robotique d'un point de prise à une position de dépôt. Dans une configuration dynamique, les relations topologiques entre les points clés, telles que les distances et les angles, évoluent continuellement ou par étapes discrètes. Les configurations dynamiques peuvent être analysées pour identifier des motifs spécifiques, comme des gestes, des trajectoires ou des mouvements complexes.

Déterminer une configuration d'une structure articulée signifie identifier, analyser et/ou reconnaître une disposition particulière des segments et articulations de la structure articulée à partir de données obtenues. Ce processus peut inclure une classification, par exemple attribuer la configuration détecté à une catégorie prédéfinie. Pour une main, déterminer une configuration peut signifier reconnaître qu'elle est ouverte ou fermée en analysant les positions relatives des articulations et des extrémités des doigts.

Des points clés sont des emplacements spécifiques définis sur une structure articulée pour représenter des segments, des articulations, des extrémités ou d'autres caractéristiques de la structure articulée. Pour une main et un poignet, les points clés peuvent inclure par exemple le centre du poignet, les articulations proximales, intermédiaires et distales des doigts, ou encore les extrémités des doigts.

Une position d'un point clé peut être définie dans un espace bidimensionnel ou tridimensionnel, avec des systèmes de coordonnées variés. Par exemple, dans un espace tridimensionnel, les données de position des points clés peuvent être exprimées sous la forme de coordonnées cartésiennes (x, y, z), de coordonnées cylindriques (r, θ, z), et/ou de coordonnées sphériques (r, θ, φ). Par exemple, dans un espace bidimensionnel, les données de position des points clés peuvent être exprimées sous la forme de coordonnées cartésiennes (x, y) et/ou de coordonnées polaires (r, θ).

Un point de référence est un point défini dans un espace bidimensionnel ou tridimensionnel, utilisé comme base pour exprimer des relations spatiales ou fonctionnelles entre les points clés d'une structure articulée. Le point de référence peut par exemple être choisi de manière à être stable et représentatif de la structure dans son ensemble ou d'une sous-structure spécifique. Par exemple, pour une main, le centre du poignet peut servir de point de référence commun à l'ensemble des points clés, car il reste relativement immobile par rapport aux mouvements des doigts. Dans un bras robotique, un point de référence peut être placé à la base de l'articulation principale pour exprimer les positions et orientations des segments.

Une direction de référence est une direction utilisée comme base pour exprimer des relations angulaires dans l'espace. Elle peut être choisie pour correspondre à une caractéristique géométrique ou fonctionnelle de la structure articulée. Par exemple :

l'axe longitudinal de la structure articulée, tel que l'axe du bras pour une main, ou

une direction orthogonale ou parallèle à un segment défini par deux points clés (par exemple, entre une articulation proximale et une articulation intermédiaire), ou

une direction absolue dans un repère global (par exemple, l'axe x, y ou z d'un repère cartésien tridimensionnel).

Une distance relative entre deux points clés, ou entre un point clé et un point de référence, peut être exprimée de plusieurs façons. La distance euclidienne $r_{12}$ entre un premier point ayant pour coordonnées cartésiennes $(x_1, y_1, z_1)$ et un deuxième point ayant pour coordonnées cartésiennes $(x_2, y_2, z_2)$ dans un espace tridimensionnel peut être exprimée sous la forme d'une valeur scalaire, calculée selon la relation $r_{12} = \sqrt{(x_2 - x_1)^2 + (y_2 - y_1)^2 + (z_2 - z_1)^2}$ . La distance relative entre deux points clés, ou entre un point clé et un point de référence, peut être normalisée, c'est-à-dire exprimée en proportion d'une longueur de référence (par exemple, la longueur totale d'une structure articulée ou d'une portion de la structure articulée.

Une orientation d'un point clé peut être exprimée comme un écart angulaire entre le vecteur reliant un point clé au point de référence et la direction de référence. Par exemple, dans un système polaire ou cylindrique, l'orientation d'un point clé peut être exprimée sous la forme d'un angle entre le point clé, le point de référence, et un axe choisi comme direction de référence. Par exemple, dans un système sphérique, l'orientation d'un point clé peut être exprimée sous la forme d'un angle solide formé par un vecteur défini par un segment (ex. poignet-extrémité du majeur) par rapport à une direction globale ou locale.

Le point de référence peut être placé à l'origine d'un système de coordonnées, notamment d'un système de coordonnées polaires, cylindriques ou sphériques. Dans ce cas, la distance relative entre un point clé et le point de référence correspond au rayon r, exprimant la distance euclidienne entre ces deux points. L'orientation relative du point clé est exprimée, dans un système polaire ou cylindrique ; par l'angle entre le vecteur reliant le point clé au point de référence et une direction de référence définie à partir du point de référence. L'orientation d'un point clé est exprimée, dans un système sphérique, sous la forme d'un premier angle entre la projection du vecteur reliant le point clé au point de référence sur un premier plan et un premier axe principal choisi comme direction de référence dans ce premier plan, et d'un deuxième angle entre la projection du vecteur reliant le point clé au point de référence sur un deuxième plan orthogonal au premier plan et un deuxième axe principal orthogonal au premier axe principal et choisi comme direction de référence dans ce premier plan.

Dans le cas d'une main humaine, si le point de référence est le centre du poignet, et si une première direction de référence est l'axe longitudinal de l'avant-bras (axe z, orienté du coude vers le poignet) et une deuxième direction de référence est l'axe transversal du plan défini par l'avant-bras et la main dans une position neutre (axe x, orienté perpendiculairement à l'axe z et aligné avec la largeur de la main au niveau du centre du poignet), les coordonnées sphériques d'un point clé, comme l'extrémité d'un doigt, permettent de capturer :

la distance r, qui décrit l'éloignement de l'extrémité du doigt par rapport au centre du poignet.
l'angle $\theta$, qui décrit l'orientation horizontale de l'extrémité du doigt par rapport au centre du poignet et à l'axe x, et
l'angle $\varphi$, qui décrit l'inclinaison verticale de l'extrémité du doigt par rapport au centre du poignet et à l'axe z.

La topologie d'une structure articulée désigne l'organisation logique et spatiale des points clés au sein de cette structure articulée, ainsi que les relations qui les unissent. Elle ne se réfère pas nécessairement à une définition mathématique stricte de la topologie, mais sert à décrire l'ordre dans lequel les points clés sont connectés ou disposés (par exemple, la séquence des articulations d'un doigt) et/ou les relations spatiales entre les points clés, par exemple sous la forme de distances, d'angles et/ou d'alignements. Dans une main humaine, la topologie capture l'organisation des doigts et des articulations, en définissant les connexions logiques entre le poignet, les articulations des doigts et leurs extrémités, ainsi que la disposition relative des doigts les uns par rapport aux autres.

Une relation topologique désigne une information décrivant une interaction fonctionnelle ou une relation spatiale entre au moins deux points clés d'une structure articulée. Une relation topologique peut être une relation de proximité entre des points clés, par exemple une relation d'adjacence, c'est-à-dire une relation directe entre deux points clés connectés par un segment ou une articulation, par exemple la disposition relative d'une articulation proximale et d'une articulation intermédiaire d'un doigt. Une relation topologique peut être une relation interne à une sous-structure, c'est-à-dire une relation entre des points clés appartenant à une même sous-structure, par exemple un doigt, par exemple la disposition relative d'une articulation distale et de l'extrémité d'un doigt. Une relation topologique peut être une relation entre sous-structures distinctes, c'est-à-dire une relation entre des points clés appartenant à des sous-structures différentes, par exemple, la disposition relative des extrémités des doigts dans une main.

Dans un contexte statique, une relation topologique entre deux points clés, ou entre un point clé et un point de référence, peut être exprimée sous la forme d'un ou plusieurs éléments de la liste suivante :

une distance, c'est-à-dire une proximité spatiale,
un angle, c'est-à-dire une orientation relative à une direction de référence, et
une relation hiérarchique, telle qu'une dépendance fonctionnelle ou structurelle, par exemple une connexion ou adjacence directe.

Les relations topologiques peuvent s'étendre à des ensembles de trois points clés ou plus, permettant de capturer des caractéristiques spatiales et fonctionnelles complexes. Une relation topologique peut par exemple comprendre une courbure locale ou une symétrie relative. Une courbure locale est une mesure de la déviation entre des points clés successifs sur une sous-structure articulée. Par exemple, dans un doigt, la courbure peut être exprimée comme l'angle formé par les segments reliant trois articulations (proximale, intermédiaire et distale). Une courbure élevée indique un doigt replié, tandis qu'une courbure faible caractérise un doigt étendu. Une symétrie relative décrit des correspondances entre sous-structures distinctes dans une structure articulée. Par exemple, dans une main ouverte, les doigts index et annulaire peuvent présenter une symétrie approximative en matière de position et d'orientation. Cette symétrie peut être exprimée sous forme de relations géométriques, telles que des distances ou des angles similaires par rapport à un axe central (ex. l'axe du majeur).

Dans un contexte dynamique, les relations topologiques ne sont pas figées et peuvent varier au cours du temps pour refléter des mouvements (ou une absence de mouvement) de la structure articulée. Chaque point clé peut avoir une trajectoire définie dans l'espace, représentée par une séquence de positions successives. Ainsi, la relation topologique entre l'extrémité d'un doigt et le poignet peut être par exemple décrite par une série de distances et/ou d'angles changeant au fil du temps.

Le voisinage topologique d'un point clé désigne l'ensemble des relations topologiques qui définissent son interaction avec d'autres points clés proches dans la structure articulée. Ces relations peuvent être directes ou indirectes. Par exemple, dans une main, le voisinage topologique de l'articulation intermédiaire du majeur peut comprendre, de manière non exhaustive :

des relations d'adjacence avec l'articulation proximale du majeur et avec l'articulation distale du majeur (donc avec des points clés de la même sous-structure),
une relation de proximité spatiale avec l'articulation intermédiaire de l'annulaire (donc avec des points clés d'une autre sous-structure).

Les termes « topologie », « relation topologique » et « voisinage topologique » sont utilisés dans ce document comme des abstractions pour décrire des relations spatiales, sans qu'ils impliquent nécessairement une structure géométrique ou mathématique stricte. Ces notions permettent de caractériser, selon l'application désirée, des configurations statiques et/ou des configurations dynamiques d'une structure articulée.

La présente divulgation concerne une technique de détermination d'une configuration d'une structure articulée.

Dans le domaine de la détection de gestes d'une main, les systèmes existants peuvent être répartis en deux catégories principales.

Une première catégorie de systèmes repose sur des algorithmes d'analyse d'images. Pour la détection de gestes statiques, un réseau de neurones convolutif (CNN) est souvent utilisé pour extraire des caractéristiques visuelles (comme des contours, des textures ou des formes) directement à partir d'images fournies. Un réseau de neurones récurrents (RNN) peut être utilisé en complément du réseau de neurones convolutif (CNN) pour traiter une séquence vidéo et ainsi détecter des gestes dynamiques. De tels systèmes nécessitent une puissance de calcul importante, sont sensibles aux variations d'éclairage et d'arrière-plan, et dépendent fortement de la qualité des images fournies.

Une deuxième catégorie de systèmes repose sur des algorithmes de classification. Des perceptrons multi-couches (MLP) sont souvent utilisés pour traiter des points clés représentant des articulations de la main ou des extrémités des doigts et reconnaître des configurations statiques. Des réseaux de neurones récurrents à mémoire court et long terme (LSTM) peuvent être utilisés en complément pour analyser des séquences temporelles de points clés et reconnaître des configurations dynamiques. Ces approches manquent souvent de précision pour des configurations complexes ou des mouvements subtils.

Contrairement aux systèmes existants de détection de gestes à partir d'une image ou d'une vidéo d'une main, la technique proposée repose sur l'exploitation de données représentant les positions des points clés et leurs relations topologiques, plutôt que sur l'analyse pixel par pixel d'une image. Ainsi, la technique proposée est indépendante des variations d'éclairage, d'arrière-plan ou de qualité des images, et est moins gourmande en ressources calculatoires, ce qui la rend adaptée, au moins dans certains modes de réalisation, à des systèmes embarqués ou contraints en temps réel.

Contrairement aux systèmes existants de détection de gestes à partir de points clés d'une main, la technique proposée prend explicitement en compte des relations topologiques entre points clés, ce qui améliore la précision et la fiabilité de la reconnaissance de configurations complexes. Optionnellement, la technique proposée utilise un réseau de neurones convolutifs pour exploiter les relations topologiques et améliorer davantage la classification des configurations.

Ainsi, la technique proposée se distingue de l'état de l'art, notamment des systèmes existants de détection de gestes.

La technique proposée ne se limite pas à la main, mais s'applique à toute structure articulée, comme les bras, jambes ou parties de squelette humain, des structures robotiques articulées, ou encore des structures animales (queues, pattes, etc...). Grâce à cela, la méthode est indépendante de la nature spécifique de la structure articulée, ce qui permet son utilisation dans des domaines variés (biomécanique, robotique, sport, etc.). La technique proposée peut s'appliquer par exemple à la détermination d'une configuration d'un corps humain entier, la configuration ainsi déterminée pouvant être utilisée pour la détermination d'une activité d'une personne.

Quelques concepts spécifiques aux réseaux de neurones artificiels sont à présent exposés.

Les réseaux de neurones artificiels (ANN pour « Artificial neural network » en anglais) sont des modèles computationnels inspirés de la structure biologique du cerveau. Ils sont constitués de couches de neurones interconnectés qui transforment des entrées en sorties à travers des poids ajustables et des fonctions d'activation. Un réseau se compose de couches d'entrée, cachées et de sortie. Chaque couche comprend des neurones configurés pour effectuer des transformations linéaires ou non linéaires sur les données qui leur sont fournies. Les poids des connexions entre neurones sont ajustés pendant une phase dite d'entraînement, via des algorithmes comme la rétropropagation, qui minimise une fonction de coût. L'entraînement peut être supervisé ou non supervisé. La sortie d'un réseau de neurones est généralement un vecteur de probabilités ou des scores numériques associés à des classes prédéfinies. Dans le contexte de ce document, les classes sont des configurations possibles d'une structure articulée.

Parmi les différents types de réseaux de neurones artificiels, il existe notamment :

les réseaux de neurones convolutifs (CNN pour « Convolutional neural networks » en anglais),
les réseaux de neurones récurrents (RNN pour « Recurrent neural networks » en anglais),

les réseaux de neurones récurrents à mémoire court et long terme (LSTM pour « Long short-term memory » en anglais), et

les perceptrons multicouches (MLP pour « Multilayer perceptron » en anglais).

Les CNN sont conçus pour traiter des données structurées en grilles. Les CNN appliquent des filtres convolutifs qui glissent sur la grille d'entrée pour extraire des caractéristiques locales pertinentes. Ces filtres permettent de détecter des motifs spécifiques, tels que des textures, des contours ou des structures spatiales, en analysant les relations locales dans les données. À chaque couche convolutive, les caractéristiques extraites deviennent de plus en plus abstraites, passant de motifs basiques (ex. contours) à des concepts complexes (ex. parties d'une structure articulée).

Dans une utilisation courante d'un CNN, des images capturées par une caméra sont converties en matrices de pixels. Par exemple, une image en niveaux de gris est représentée par une grille 2D, où chaque case contient une valeur d'intensité lumineuse (ex. 0 pour le noir, 255 pour le blanc). Une image couleur est encodée en une grille 3D, avec trois canaux (rouge, vert, bleu), chaque canal contenant une grille d'intensités pour la couleur correspondante. Le CNN analyse cette ou ces grilles pour extraire des motifs utiles à la tâche, comme reconnaître un geste statique d'une main. Avant d'être traitées par le CNN, les images peuvent être normalisées, redimensionnées ou encodées.

Dans une utilisation d'un CNN selon un mode de réalisation de la technique proposée, des données de points clés sont fournies en entrée sous la forme de tenseurs structurés. Un tenseur est une structure multidimensionnelle (ex. 2D, 3D ou plus), organisée pour refléter les caractéristiques des données d'entrée. Pour une structure articulée, chaque point clé peut être représenté par un ensemble de valeurs (par exemple, ses coordonnées dans un ou plusieurs systèmes). Par exemple, un ensemble de valeurs représentant un point clé peut être un triplet, comprenant la position (x, y) du point clé dans un système de coordonnées cartésiennes et la distance (r) entre le point clé et l'origine des coordonnées dans un système de coordonnées polaires. Alternativement, un ensemble de valeurs représentant un point clé peut être un quadruplet, incluant en outre l'angle polaire (θ). Ces ensembles de valeurs peuvent être organisées dans un tenseur de manière à refléter les relations topologiques entre points clés (ex. points adjacents situés dans des cases proches). En plus des positions des points clés, le tenseur peut inclure des relations topologiques explicites, comme des distances et des angles. Alternativement, la structure même du tenseur peut être choisie pour que le CNN déduise implicitement ces relations à partir de la disposition des données. Ce mode de réalisation de la technique proposée permet au CNN d'analyser directement les données de la structure articulée, ce qui réduit la complexité par rapport à l'utilisation connue d'un CNN pour l'analyse d'une image.

Les RNN sont conçus pour traiter des séquences de données, grâce à des connexions récurrentes qui permettent de conserver une mémoire des états précédents. À chaque étape temporelle, le RNN prend en entrée une donnée de la séquence (par exemple, une configuration statique détectée par un CNN) et met à jour son état interne. Cet état interne capture l'historique des données précédentes, permettant au RNN de modéliser des relations temporelles. Les RNN simples peuvent avoir du mal à capturer des relations temporelles sur des séquences longues en raison de la disparition des gradients pendant l'entraînement. Dans un système combinant CNN et RNN pour détecter des gestes dynamiques, le CNN détermine des configurations statiques successives à partir d'images d'entrée, et le RNN analyse ces configurations dans le temps pour détecter des motifs ou des gestes dynamiques.

Les MLP sont des réseaux entièrement connectés où chaque neurone de chaque couche est connecté à tous les neurones de la couche précédente. Les MLP sont bien adaptés pour traiter des vecteurs de caractéristiques, où chaque caractéristique est une entrée. Les données sont transformées à travers plusieurs couches, chaque transformation permettant de détecter des motifs de plus en plus complexes. Les MLP peuvent classer des configurations statiques de la structure articulée (par exemple, "main ouverte", "poing fermé") à partir des positions des points clés. Ils sont souvent utilisés pour des tâches où les relations temporelles ne sont pas nécessaires.

Les LSTM sont une variante des RNN, conçus pour traiter des séquences longues en surmontant les problèmes de disparition de gradients. Les LSTM utilisent des cellules de mémoire et des mécanismes de portes (entrée, oubli, sortie) pour contrôler quelles informations sont stockées, mises à jour ou oubliées à chaque étape temporelle. Cela leur permet de capturer des relations temporelles complexes sur des séquences longues. Les LSTM peuvent analyser des séquences de configurations statiques pour détecter des gestes dynamiques complexes, comme une salutation ou un mouvement fluide de fermeture de la main. Ils sont particulièrement utiles pour modéliser des gestes subtils nécessitant la prise en compte de relations temporelles à long terme.

Il est à présent fait référence aux figures 1 et 2.

La figure 1 représente un exemple possible d'ordinogramme d'un procédé convenant à la mise en œuvre de la technique proposée. Cet ordinogramme fait apparaître différents modules logiques définis chacun par une fonction spécifique :

un module 100 d'entrée,
un module 200 de traitement,
un module 300 de structuration,
un module 400 de détermination de configuration, et
un module 500 de sortie.

La figure 2 représente une main humaine en tant qu'exemple possible de structure articulée pour laquelle vingt et un points clés sont définis comme suit.

Un point clé 0 est situé au centre du poignet. Quatre points clés 1, 2, 3, 4 sont situés aux articulations proximale, médiane et distale et à l'extrémité du pouce. Quatre points clés 5, 6, 7, 8 sont situés respectivement aux articulations proximale, médiane et distale et à l'extrémité de l'index. Quatre points clés 9, 10, 11, 12 sont situés respectivement aux articulations proximale, médiane et distale et à l'extrémité du majeur. Quatre points clés 13, 14, 15, 16 sont situés respectivement aux articulations proximale, médiane et distale et à l'extrémité de l'annulaire. Quatre points clés 17, 18, 19, 20 sont situés respectivement aux articulations proximale, médiane et distale et à l'extrémité de l'auriculaire.

Le module 100 d'entrée est configuré pour obtenir des positions des points clés de la structure dans un système de coordonnées, par exemple sous la forme de doublets $(x_i, y_i)$ où $x_i$ et $y_i$ sont les positions horizontale et verticale d'un point clé i dans une image formée d'une grille de pixels. Les doublets sont concaténés pour former, dans l'exemple de la figure 2, un vecteur de dimension 42 (21 points clés et 2 valeurs par point clé). L'obtention des positions des points clés peut être mise en œuvre selon diverses méthodes connues en soi.

Le module 200 de traitement et le module de structuration 300 sont configurés pour respectivement traiter et structurer les positions des points clés obtenues par le module d'entrée afin de les préparer pour un traitement ultérieur par le module 300 de détermination de configuration.

Le traitement par le module 200 de traitement peut comprendre une ou plusieurs opérations visant à transformer et/ou enrichir les positions obtenues.

Par exemple, le traitement peut comprendre un changement de repère. Les positions des points clés peuvent être exprimées dans un nouveau système de coordonnées, par exemple en plaçant un point spécifique (comme le point clé 0, centre du poignet) à l'origine. La position du point clé i dans ce système de coordonnées peut être calculée, en coordonnées cartésiennes, comme étant $(x_i - x_0, y_i - y_0)$, où $x_0$ et $y_0$ sont les positions horizontale et verticale du point clé 0 telles qu'obtenues par le module 100 d'entrée et $x_i$, $y_i$ sont les positions horizontale et verticale du point clé $i$.

Par exemple, le traitement peut comprendre un changement de système de coordonnées. La position du point clé i exprimée en coordonnées cartésiennes dans un système ayant pour origine le point clé 0 peut être par exemple convertie en coordonnées polaires $(r_i, \theta_i)$ où :

$$r_i = \sqrt{(x_i - x_0)^2 + (y_i - y_0)^2}$$

et

$$\theta_i = \arctan\left(y_i - y_0, x_i - x_0\right).$$

La figure 3 illustre un résultat d'un tel changement de système de coordonnées pour le point clé 5. La conversion en coordonnées polaires est ici particulièrement utile pour permettre au module 300 d'analyser directement des distances et/ou des angles entre des points clés et le centre du poignet.

Par exemple, le traitement peut comprendre un enrichissement des positions données obtenues en ajoutant des relations topologiques dérivées ou calculées à partir des positions obtenues. La distance $r_i$ et l'angle $\theta_i$ sont des exemples de relations topologiques dérivées à partir des positions obtenues $x_0$, $x_i$, $y_0$ et $y_i$.

D'autres exemples, non exhaustifs, de relations topologiques incluent :

la distance $r_{ij}$ entre des points clés i, j de coordonnées respectives $(x_i, y_i)$ et $(x_j, y_j)$, et

un angle $\widehat{ijk}$ ayant pour sommet le point j et formé entre les vecteurs $\vec{ij}$ et $\vec{jk}$, où k est un point de coordonnées $(x_k, y_k)$.

Les données de points clés représentent des informations dérivées ou calculées à partir des positions obtenues par le module 100 d'entrée.

Lorsque le module 200 de traitement met en œuvre un traitement des positions obtenues, les données de points clés comprennent les positions transformées et/ou enrichies par un tel traitement. Alternativement, en l'absence du module 200 de traitement, les données de points clés sont simplement les positions obtenues par le module 100, sans transformation ni enrichissement.

Le module 300 de structuration est configuré pour structurer ou organiser les données de points clés issues du module 200 de traitement en une structure exploitable par le module 400 de détermination.

La structuration peut comprendre la génération d'un tenseur multidimensionnel regroupant les données de points clés.

La structuration peut comprendre un réordonnancement, ou une réorganisation, des données de points clés pour refléter des relations topologiques à travers leur ordre. Selon un exemple d'ordre naturel, les points clés sont organisés selon leur appartenance à un doigt, par exemple (1,2,3,4) pour le pouce, (5,6,7,8) pour l'index, etc. Cet ordre reflète l'adjacence des points clés au sein d'une sous-structure (un doigt). Selon un exemple d'ordre alternatif, les points sont regroupés en fonction de relations spécifiques, par exemple (4,8,12,16,20) regroupe les extrémités des doigts, (3,7,11,5,19) regroupe les articulations proximales, etc.

Si le module 300 est absent, l'ordre naturel des positions ou des données de points clés issues des modules précédents peut être directement utilisé. Un vecteur concaténé de positions obtenues par le module 100 ou de données de points clés issues du module 200 peut suffire pour transmettre implicitement des relations topologiques, comme dans l'ordre (1, 2, 3, 4), (5, 6, 7, 8), etc.

Le module 400 de détermination est configuré pour analyser les données structurées produites par le module 300 (ou directement par le ou les modules précédents si le module 300 est absent) afin de déterminer une configuration statique de la structure articulée.

Ainsi, le module 400 peut être configuré pour recevoir en tant que données d'entrée :

> un tenseur regroupant les données structurées des points clés,
> un vecteur de positions concaténées, ou
> un vecteur de données de points clés concaténées.

Dans un exemple de réalisation, le module 400 utilise un réseau de neurones convolutifs (CNN) pour analyser les données d'entrée.

Le CNN peut être configuré pour extraire des caractéristiques locales à partir des données d'entrée (par exemple, des relations entre points clés adjacents), combiner des caractéristiques locales extraites pour identifier des motifs globaux représentant des configurations (par exemple, "main ouverte", "poing fermé"), et classer les configurations dans des catégories prédéfinies, chaque catégorie correspondant à une configuration statique spécifique.

Le CNN peut être configuré pour déterminer une probabilité ou un score associé à chaque catégorie de configuration possible, par exemple sous la forme d'un vecteur de probabilités ("main ouverte" : 95%, "poing fermé" : 5%).

Dans un exemple de réalisation, la structure articulée est une main humaine telle que représentée par 21 points clés comme illustré sur la figure 2, les données d'entrée sont structurées sous la forme d'un tenseur 600, comme illustré sur la figure 4 et le module 400 analyse les données d'entrée en utilisant un réseau de neurones convolutifs 700 comme illustré sur la figure 5.

La première dimension $dim_1$ du tenseur 600 correspond aux caractéristiques associées à chaque point clé. Par exemple, sur la figure 4, chaque point clé est décrit par 4 valeurs $(x_i - x_0, y_i - y_0, r_i, \theta_i)$, aussi $dim_1 = 4$. La deuxième dimension $dim_2$ du tenseur 600 correspond au nombre de points clés par sous-structure articulée. Par exemple, sur la figure 4, chaque doigt est décrit par 4 points clés, par exemple les points clés 1, 2, 3, 4 représentent le pouce, aussi $dim_2 = 4$. Dans cet exemple, le point clé 0 est placé par convention à l'origine et n'appartient à aucune sous-structure articulée. La troisième dimension $dim_3$ du tenseur 600 correspond au nombre de sous-structures articulée. Par exemple, sur la figure 4, la main a 5 doigts, aussi $dim_3 = 5$. Le tenseur est ainsi, dans cet exemple, de dimensions 4x4x5.

Le réseau de neurones convolutif 700 est configuré pour analyser les données structurées de points clés et déterminer une configuration statique de la main en exploitant à la fois des relations locales et globales entre ces points clés. Dans un exemple de réalisation, le réseau de neurones convolutif 700 comprend au moins :

> une couche convolutive 710 configurée pour extraire des motifs locaux à partir de données 610 représentant des points clés d'une même sous-structure articulée, et
> une couche convolutive 720 configurée pour extraire des motifs locaux à partir de données 620 représentant des points clés appartenant à différentes sous-structures articulées mais partageant des relations topologiques.

Pour isoler à partir du tenseur 600 les données 610 de points clés appartenant à une même sous-structure articulée spécifique (un doigt), on fixe l'index de la dimension $dim_3$. Par exemple, les données de points clés du pouce, indexé à $index(dim_3) = 1$, sont $[*,* ,1]$, la notation * indiquant que toutes les valeurs des dimensions $dim_1$ et $dim_2$ sont incluses. Cela produit une matrice 4x4 où les 4 lignes représentent les caractéristiques de points clés et les 4 colonnes représentent les 4 points clés décrivant le pouce (articulations et extrémité).

La couche convolutive 710 applique des filtres convolutifs glissant sur cette matrice $4 \times 4$. Chaque filtre analyse les relations entre les points clés d'un même doigt, détectant des motifs locaux tels qu'une disposition linéaire ou courbée de ces points clés. La présence, dans les données 610, de valeurs de distance $r_i$ ou d'angles $\theta_i$ facilite la détection par la couche convolutive 710 de ces motifs locaux. Si les points clés du pouce forment par exemple une courbure caractéristique, cette courbure peut être un indicateur pour reconnaître un geste global tel que « main ouverte ». La couche convolutive 710 détermine, sur la base des motifs locaux détectés, une carte de caractéristiques locales représentant les motifs détectés au sein de chaque doigt.

Pour isoler à partir du tenseur 600 les données 620 de points clés appartenant à différentes sous-structures articulées mais partageant des relations topologiques, c'est-à-dire dans cet exemple les données de l'un des quatre groupes de points clés suivants :

> un groupe comprenant les points clés 4, 8, 12, 16, 20 situés aux extrémités des doigts,
> un groupe comprenant les points clés 3, 7, 11, 15, 19 situés aux articulations distales,
> un groupe comprenant les points clés 2, 6, 10, 14, 18 situés aux articulations intermédiaires et
> un groupe comprenant les points clés 1, 5, 9, 13, 17 situés aux articulations proximales, on fixe l'index de la dimension $dim_2$. Par exemple, les données de points clés des extrémités de doigts, indexées à $index(dim_2) = 4$, sont $[*,4,*]$. Cela produit une matrice 4x5 où les 4 lignes représentent les caractéristiques de points clés et les 5 colonnes représentent les 5 points clés décrivant Is extrémités des doigts.

La couche convolutive 720 applique des filtres convolutifs glissant sur cette matrice 4×5. Chaque filtre analyse les relations entre les points clés d'un même groupe, détectant des motifs globaux tels qu'une symétrie relative ou un écartement entre les extrémités des doigts. La présence, dans les données 620, de valeurs de distance $r_i$ ou d'angles $\theta_i$ facilite la détection par la couche convolutive 720 de ces motifs globaux. Une disposition étalée des extrémités peut indiquer une main ouverte, tandis qu'un rapprochement des extrémités peut indiquer un poing fermé. La couche convolutive 720 détermine, sur la base des motifs locaux détectés, une carte de caractéristiques globale représentant les relations détectées entre les doigts.

Dans un exemple possible d'architecture du réseau de neurones convolutifs 700, les sorties des couches convolutives 710 (caractéristiques locales) et 720 (caractéristiques globales) sont aplaties en vecteurs 1D, puis les vecteurs 1D sont concaténés pour former un seul vecteur global. Une fonction d'activation Relu est appliquée au vecteur global pour introduire une non-linéarité et permettre l'apprentissage de relations complexes. Des couches entièrement connectées successives transforment le vecteur global en un vecteur de sortie. Enfin, une fonction d'activation sigmoïde est appliquée à la sortie pour produire un vecteur de probabilités 800, où chaque valeur représente la probabilité d'une catégorie ou classe parmi un ensemble de n classes prédéfinies, c'est-à-dire parmi un ensemble discret de configurations possibles.

Un exemple de vecteurs de probabilités peut par exemple contenir l'information suivante :

classe 1 (« poing fermé ») : 5 %,
classe 2 (« main ouverte ») : 95 %,
autres classes : 0 %.

La description des points clés d'une main par des quadruplets $(x_i\text{-}x_0\,, y_i\text{-}y_0\,, r_i, \theta_i)$ traduisant à la fois des données de position et des relations topologiques d'adjacence, la structuration de l'ensemble des points clés sous la forme d'un tenseur de dimensions 4x4x5 permettant de mettre en évidence des relations topologiques entre des points clés appartenant ou non à une même sous-structure articulée, et l'utilisation d'un CNN configuré pour analyser ces données structurées contribuent chacun à améliorer la précision du procédé proposé. Ensemble, lors de certaines expérimentations menées par les inventeurs, ces avancées permettent d'augmenter de plus de 8 % le taux de bonne classification par rapport aux procédés existants de détermination de configuration statique d'une main. Ainsi, dans au moins certains modes de réalisation, la technique proposée combine la précision des méthodes basées sur des images avec la simplicité et l'efficacité des méthodes utilisant des points clés, offrant ainsi une solution performante et frugale.

Par exemple, le module 500 peut être configuré pour traduire un vecteur de probabilités déterminé par le module 400 en une configuration unique. Cette traduction peut consister à sélectionner la classe correspondant à la probabilité la plus élevée. Ainsi, si le module 400 produit un vecteur de probabilités indiquant, par exemple, que la configuration « main ouverte » est associée à une probabilité de 95 % et la configuration « poing fermé » à une probabilité de 5 %, le module 500 interprète ces résultats pour déterminer que la main est en position de « main ouverte ». Une fois cette interprétation réalisée, le module 500 peut convertir cette classe déterminée en divers formats adaptés à des contextes d'utilisation spécifiques. Par exemple, il peut générer un texte descriptif tel que « configuration détectée : main ouverte », utilisable dans des systèmes de diagnostic ou des environnements éducatifs pour fournir des informations détaillées sur les configurations détectées. Le module 500 peut également produire des représentations graphiques, par exemple sous forme d'images ou de modèles 3D illustrant la configuration détectée, qui peuvent être affichées dans une interface utilisateur ou utilisées pour simuler des mouvements dans un environnement de réalité augmentée ou virtuelle.

En complément des textes descriptifs et des représentations graphiques, le module 500 peut être configuré pour convertir les configurations détectées en commandes logiques adaptées à des systèmes interactifs. Ces commandes peuvent être utilisées pour activer des actions spécifiques dans des interfaces homme-machine ou des systèmes robotiques. Par exemple, si le module 400 détecte une configuration de « main ouverte », le module 500 peut interpréter cette configuration comme une commande « sélectionner » dans une interface utilisateur, permettant à l'utilisateur de pointer ou de cliquer sur un élément affiché à l'écran. Dans un autre cas, si la configuration détectée est celle d'un « poing fermé », le module 500 peut interpréter cela comme une commande « saisir » dans un système de robotique, par exemple pour activer la prise d'un bras robotique. Ces commandes peuvent également être associées à des gestes dynamiques lorsqu'une séquence de configurations statiques est identifiée. Par exemple, le geste dynamique correspondant à un clic, constitué d'une succession de configurations « index levé », « index à moitié baissé », « poing fermé », « index à moitié baissé », « index levé », peut être interprété par le module 500 comme une commande « clic virtuel » dans une interface utilisateur.

Le module 500 peut aussi transmettre les données de sortie à des systèmes externes pour des applications variées. Par exemple, dans un contexte interactif avec une interface homme-machine, un texte descriptif tel que « configuration : main ouverte » ou une commande logique « sélectionner » peut être envoyé à un système de navigation pour pointer ou sélectionner un élément affiché à l'écran. Dans des environnements robotiques, une commande « saisir » correspondant à une configuration « poing fermé » peut être transmise à un bras robotique pour lui permettre de manipuler un objet. Dans un environnement de réalité augmentée, une représentation graphique de la configuration détectée peut être affichée à l'utilisateur pour visualiser l'état ou le mouvement de la main. En outre, le module 500 peut intégrer ces résultats dans des systèmes éducatifs ou d'entraînement, en générant des rapports détaillés sur les gestes détectés ou en fournissant une représentation visuelle des configurations pour aider à l'apprentissage des mouvements articulaires.

En plus de ces actions interactives et représentations visuelles, le module 500 peut être configuré pour produire des flux de données structurés destinés à des systèmes d'analyse ou de surveillance. Par exemple, il peut transmettre les configurations statiques ou dynamiques détectées sous forme de symboles ou de codes. Dans le cadre d'une interface homme-machine complexe, ces symboles peuvent être combinés en séquences pour représenter des gestes dynamiques plus complexes. Par exemple, le module 500 peut associer le symbole « I » à une configuration « index levé », « P » à une configuration « poing fermé » et générer une séquence telle que « liPil » pour indiquer un clic. Ces séquences peuvent ensuite être utilisées par des systèmes externes pour exécuter des commandes complexes ou être affichées sous forme de texte descriptif, par exemple « commande détectée : clic ». Cette flexibilité permet de répondre aux besoins variés des systèmes interactifs, qu'il s'agisse d'applications dans la robotique, la domotique, la réalité virtuelle ou augmentée, ou encore des systèmes médicaux nécessitant une interaction sans contact.

Le module 500 peut donc être vu comme une interface permettant de relier les résultats du module 400 à des applications concrètes, en traduisant ces résultats en formats adaptés aux exigences des utilisateurs et/ou des systèmes connectés.

La figure 6 illustre un exemple de configuration dynamique 910 d'une main, formée par une succession de configurations statiques élémentaires distinctes, numérotées 900, 901, 902, 903 et 904. Ces configurations statiques représentent des positions intermédiaires de la main, capturées à différents moments dans le temps.

Dans cet exemple, la configuration dynamique 910 correspond à un geste complexe simulant un clic virtuel, constitué des actions suivantes : baisser l'index, former un poing fermé, puis relever l'index. Chaque étape de ce geste peut être représentée par une configuration statique élémentaire. La première configuration statique 900 correspond à une position initiale où l'index est levé, indiquant une posture d'attente ou de préparation. La configuration suivante 901 capture une étape intermédiaire où l'index est à moitié baissé, traduisant le début du mouvement de clic. La configuration 902 correspond à un poing fermé, représentant le point culminant de la dynamique, où l'index est complètement baissé. La configuration 903 revient à une position intermédiaire similaire à 901, mais dans une phase de relâchement, et enfin, la configuration 904 correspond au retour à la position initiale avec l'index à nouveau levé.

Cette décomposition d'un geste dynamique en configurations statiques élémentaires permet une approche modulaire pour la reconnaissance des gestes dynamiques. Le module 400 de détermination peut être configuré pour détecter et identifier les configurations statiques 900, 901, 902, 903 et 904 de manière indépendante. Ensuite, le module 500 de sortie peut être configuré pour associer ces configurations à des symboles distincts (par exemple, « I » pour index levé, « i » pour index à moitié baissé, et « P » pour poing fermé), puis pour générer une séquence de symboles correspondant à la dynamique complète du geste. La séquence de symboles peut être interprétée pour détecter un mouvement ou une absence de mouvement en appliquant un critère prédéfini. Par exemple, une absence de mouvement peut être détectée si un même symbole est répété au moins un certain nombre de fois consécutives dans la séquence (par exemple, « PPPPPPPP » pour un poing fermé maintenu). À l'inverse, la présence de plusieurs symboles distincts au sein d'une séquence de taille donnée peut indiquer un mouvement. La taille d'une séquence est définie comme le nombre total de symboles qu'elle contient. En pratique, une séquence peut être très longue, ce qui peut rendre son analyse complète plus complexe. Pour simplifier cette analyse, une séquence peut être divisée en portions plus petites, chaque portion correspondant soit à un mouvement identifié ou non, soit à une absence de mouvement. Cette division permet de traiter des gestes dynamiques comme une série d'unités analytiques élémentaires. Par exemple, une séquence « IIPPPiiiPPP » peut être interprétée comme correspondant à un geste dynamique comprenant plusieurs étapes : un index levé (« II »), un poing fermé (« PPP »), un index à moitié baissé (« iii »), puis de nouveau un poing fermé (« PPP »). Chaque portion peut être analysée pour déterminer sa contribution à un geste global.

Par exemple, pour la configuration dynamique 910, les symboles associés aux configurations statiques élémentaires sont les suivants :

la configuration 900 est associée au symbole « I » (index levé),
la configuration 901 est associée au symbole « i » (index à moitié baissé),
la configuration 902 est associée au symbole « P » (poing fermé),
la configuration 903 est associée au symbole « i » (index à moitié baissé), et
la configuration 904 est associée au symbole « I » (index levé).

La séquence résultante, « IiPil », est ensuite analysée par le module 500 de sortie, qui la reconnaît comme un clic virtuel.

L'utilisation d'une telle séquence de symboles facilite la gestion de variations dans l'exécution des gestes dynamiques. Par exemple, si le geste est réalisé plus lentement ou plus rapidement, entraînant des répétitions ou des écarts dans les configurations détectées (par exemple, « IliiPPiill » au lieu de « liPil »), ou en cas d'erreur ponctuelle de reconnaissance d'une configuration statique par le module 400, la séquence peut toujours être reconnue grâce à l'utilisation d'expressions régulières. En d'autres termes, l'utilisation d'une telle séquence de symboles offre une robustesse accrue dans la reconnaissance d'une configuration dynamique d'une structure articulée.

Les expressions régulières permettent de décrire des motifs flexibles pour rechercher des séquences dans un flux de symboles. Par exemple, dans le cas du geste correspondant à un clic (séquence idéale : « liPil »), une expression régulière peut être conçue pour permettre d'identifier des séquences qui respectent l'ordre des étapes du geste (index levé puis index à moitié baissé puis poing fermé puis retour), en tolérant des répétitions involontaires, par exemple plusieurs « I » ou « i » consécutifs (ex. « IliiPPiill ») et en ignorant des configurations intermédiaires non significatives ou mal détectées (ex. un symbole « _ » inséré entre deux configurations).

Par exemple, pour le geste « clic », une expression régulière possible peut être « I+i*P+i*I+ », où

I+ désigne une ou plusieurs occurrences consécutives de « I » (index levé).
i* désigne zéro, une ou plusieurs occurrences de « i » (index à moitié baissé), et
P+ désigne une ou plusieurs occurrences de « P » (poing fermé).

Ainsi, le module 500 peut être configuré pour rechercher une correspondance entre une séquence de symboles obtenue (par exemple « IliiPPiill » et l'expression régulière « I+i*P+i*I+ » et, sur détection d'une telle correspondance, générer une commande correspondant à un clic.

La recherche de correspondance peut s'appuyer sur une mesure de similarité entre la séquence détectée et une ou des séquences de référence, comme des séquences préenregistrées (par exemple une expression régulière. Divers algorithmes de calcul de distance ou de similarité peuvent être utilisés selon les modes de réalisation. Par exemple, il peut s'agir d'algorithmes de calcul de distance ou de similarité dans des espaces multi-dimensionnels tels que ceux des séquences de symboles, notamment la distance de Levenshtein, les algorithmes de similarité temporelle (DTW pour « Dynamic time warping » en anglais, etc.).

La capacité à reconnaître une structure dynamique par l'utilisation d'une séquence de symboles associés à des configurations statiques déterminées ne se limite pas au cas où la configuration dynamique correspond à un clic, mais peut s'appliquer à de nombreuses configurations dynamiques pouvant ou non être interprétées comme des commandes. Par exemple, une commande de « zoom avant » peut être déclenchée sur détection d'une séquence de configurations statiques où les doigts s'écartent progressivement, tandis qu'une commande de « zoom arrière » peut être déclenchée sur détection d'une séquence de configurations statiques où les doigts se rapprochent. De même, des commandes telles que « glisser » ou « rotation » peuvent être déclenchées sur détection de séquences de configurations statiques élémentaires reflétant des étapes intermédiaires d'un mouvement correspondant. D'autres expressions régulières peuvent ainsi être définies pour diverses configurations dynamiques supportées.

Alternativement, il est possible de procéder directement à l'analyse des configurations statiques successives afin d'identifier une configuration dynamique sans passer par une étape explicite de conversion en symboles.

Dans un premier exemple, les configurations statiques élémentaires détectées par le module 400 peuvent être directement traitées sous forme de vecteurs de caractéristiques temporelles. Chaque configuration statique est représentée par un ensemble de caractéristiques numériques (par exemple, les coordonnées des points clés, les distances relatives, les angles, ou d'autres relations topologiques). Ces vecteurs de caractéristiques sont alors regroupés dans une structure temporelle, comme une séquence ou une matrice, qui est analysée par un classifieur temporel tel qu'un réseau de neurones récurrent (RNN) ou une variante comme un réseau LSTM. Ces modèles sont configurés pour détecter des motifs dans la variation des caractéristiques temporelles, permettant ainsi de reconnaître une configuration dynamique telle qu'un clic, un zoom ou un balayage, sans conversion préalable des configurations statiques en symboles.

Dans un deuxième exemple, une configuration dynamique peut être reconnue en utilisant une approche statistique basée sur des modèles probabilistes. Ici, chaque configuration statique élémentaire est associée à une probabilité conditionnelle dépendant des configurations statiques précédentes et suivantes dans la séquence temporelle. Un modèle comme un réseau de Markov caché (HMM) peut être entraîné pour représenter les transitions probables entre configurations statiques au sein d'un geste dynamique donné. Une fois le modèle entraîné, la configuration dynamique peut être déterminée en identifiant la séquence la plus probable de transitions correspondant aux configurations statiques observées. Par exemple, pour un clic, le modèle HMM peut capturer la probabilité élevée d'une transition de « index levé » à « index à moitié baissé », puis à « poing fermé », et enfin le retour à « index levé ».

Dans un troisième exemple, la configuration dynamique peut être reconnue à l'aide d'un réseau de neurones convolutifs 3D (CNN 3D), conçu pour traiter directement des séquences temporelles de configurations statiques. Dans cette approche, les données des points clés de chaque configuration statique sont structurées sous forme de tenseurs tridimensionnels où une dimension supplémentaire représente l'évolution dans le temps. Le CNN 3D extrait des caractéristiques spatio-temporelles en analysant simultanément les relations entre points clés à un instant donné et leur variation au cours du temps. Cette approche permet une reconnaissance robuste des gestes dynamiques en prenant en compte à la fois les caractéristiques locales (au sein d'une configuration statique) et globales (entre configurations successives).

**Application industrielle**

Les solutions techniques proposées dans la présente divulgation peuvent trouver des applications dans de nombreux domaines où elles contribuent à améliorer l'interaction homme-machine, l'efficacité de systèmes automatisés, et/ou la précision dans la reconnaissance de configurations articulées. Ces solutions peuvent être intégrées dans des systèmes de contrôle gestuel, des environnements de réalité augmentée ou virtuelle, et/ou des systèmes robotiques avancés.

En outre, la présente divulgation ne se limite pas aux exemples de réalisation décrits précédemment, qui sont fournis uniquement à titre illustratif. Elle englobe toutes les variantes et modifications que l'homme du métier pourrait envisager dans le cadre des revendications et de la protection recherchée. Ces variantes incluent, sans s'y limiter, des adaptations à différents types de structures articulées, une utilisation de combinaisons de plusieurs réseaux de neurones, et/ou encore divers types de structuration et de traitement des données de points clés.

Notamment, bien que les exemples décrits se concentrent sur une représentation bidimensionnelle des positions des points clés, une représentation tridimensionnelle est aussi possible. Dans ce cas les données de positions d"un point clé peuvent être représentées par trois coordonnées cartésiennes et une, deux ou trois coordonnées supplémentaires dans un autre système de coordonnées (par exemple une distance et zéro, un ou deux angles).

**Revendications**

1. Procédé de détermination d'une configuration d'une structure articulée, le procédé étant mis en œuvre par ordinateur, et
la détermination de la configuration de la structure articulée tenant compte :

de positions de points clés de la structure articulée, et
d'au moins une relation topologique entre points clés,
dans lequel la détermination de la configuration est répétée dans le temps, le procédé comprenant :

une détermination d'un mouvement de la structure articulée sur la base des configurations déterminées.

2. Module de détermination (400) d'une configuration d'une structure articulée, la détermination tenant compte :

de positions de points clés de la structure articulée, et
d'au moins une relation topologique entre points clés,
dans lequel la détermination de la configuration est répétée dans le temps, le module étant configuré pour :
déterminer un mouvement de la structure articulée sur la base des configurations déterminées.

3. Programme d'ordinateur comprenant des instructions qui, lorsque le programme est mis en œuvre par un processeur, conduisent à mettre en œuvre le procédé selon la revendication 1.

4. Procédé selon la revendication 1, module selon la revendication 2 ou programme d'ordinateur selon la revendication 3, où les positions des points clés sont exprimées dans un premier système de coordonnées et l'au moins une relation topologique est exprimée dans un deuxième système de coordonnées.

5. Procédé, module ou programme d'ordinateur selon la revendication 4, où le premier système de coordonnées est un système de coordonnées cartésiennes et le deuxième système de coordonnées est un système de coordonnées polaires, cylindriques ou sphériques.

6. Procédé selon la revendication 1 ou 4, module selon la revendication 2 ou 4, programme d'ordinateur selon la revendication 3 ou 4 , où la structure articulée comprend une main et un poignet.

7. Procédé selon la revendication 1 ou l'une des revendications 4 à 6, module selon la revendication 2 ou l'une des revendications 4 à 6 ou programme d'ordinateur selon l'une des revendications 3 à 6, où la structure articulée est divisée en une pluralité de sous-structures articulées comprenant au moins une articulation et/ou au moins une extrémité.

8. Procédé selon la revendication 1 ou l'une des revendications 4 à 7, module selon la revendication 2 ou l'une des revendications 4 à 7 ou programme d'ordinateur selon l'une des revendications 3 à 7, dans lequel une relation topologique comprend une distance et/ou un angle.

9. Procédé selon la revendication 1 ou l'une des revendications 4 à 8, module selon la revendication 2 ou l'une des revendications 4 à 8 ou programme d'ordinateur selon l'une des revendications 3 à 8, dans lequel une relation topologique est au moins un élément d'une liste comprenant :

   une relation de proximité entre des points clés, une relation entre des points clés appartenant à une même sous-structure articulée, ou une relation entre des points clés appartenant à des sous-structures articulées distinctes.

10. Procédé selon la revendication 1 ou l'une des revendications 4 à 9, module selon la revendication 2 ou l'une des revendications 4 à 9 ou programme d'ordinateur selon l'une des revendications 3 à 9, dans lequel la configuration déterminée de la structure articulée est choisie parmi un ensemble discret de configurations possibles.

11. Procédé selon la revendication 1 ou l'une des revendications 4 à 10, module selon la revendication 2 ou l'une des revendications 4 à 10 ou programme d'ordinateur selon l'une des revendications 3 à 10, dans lequel la détermination du mouvement dynamique de la structure articulée comprend :

   une construction d'une séquence de symboles, un symbole représentant une configuration déterminée, et une détection d'un motif dans la séquence de symboles.

12. Procédé selon la revendication 1 ou l'une des revendications 4 à 11, module selon la revendication 2 ou l'une des revendications 4 à 11 ou programme d'ordinateur selon l'une des revendications 3 à 11, dans lequel la configuration de la structure articulée est déterminée à l'aide d'un réseau de neurones convolutifs (700).

13. Procédé, module ou programme d'ordinateur selon la revendication 12, dans lequel le réseau de neurones convolutifs (700) est appliquée à des données structurées sous une forme permettant de déduire l'au moins une relation topologique.

14. Procédé selon la revendication 1 ou l'une des revendications 4 à 13, module selon la revendication 2 ou l'une des revendications 4 à 13 ou programme d'ordinateur selon l'une des revendications 3 à 13, comprenant une détermination d'une commande utilisateur en fonction d'une similarité entre la configuration déterminée et une configuration associée à ladite commande.

[Fig. 1]

FIG. 1

[Fig. 2]

FIG. 2

[Fig. 3]

FIG. 3

[Fig. 4]

FIG. 4

FIG. 5

[Fig. 5]

EP 4 760 660 A1

18

[Fig. 6]

FIG. 6

| | | Europäisches Patentamt<br>European Patent Office<br>Office européen des brevets | **RAPPORT DE RECHERCHE EUROPEENNE** | Numéro de la demande<br>**EP 25 22 0220** |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2022/198682 A1 (OH PAUL [KR]) 23 juin 2022 (2022-06-23) * alinéas [0003], [0052], [0067] - [0070], [0079], [0092] - [0103], [0131]; figures 3-5 *<br>----- | 1-14 | INV.<br>G06V40/10<br>G06V40/20 |
| A | US 2019/073040 A1 (LUCHNER WOLFRAM [US] ET AL) 7 mars 2019 (2019-03-07) * alinéas [0003], [0004], [0024], [0035]; figures 2,6-7 *<br>----- | 1-14 | |
| A | EP 4 068 150 A1 (BIGO TECH PTE LTD [SG]) 5 octobre 2022 (2022-10-05) * alinéas [0022] - [0027], [0042] - [0045], [0059], [0075], [0084]; figures 2,4-8 *<br>----- | 1-14 | |
| A | EP 4 465 258 A1 (BAYERISCHE MOTOREN WERKE AG [DE]) 20 novembre 2024 (2024-11-20) * alinéas [0032], [0033], [0068], [0077]; figures 2,3 *<br>----- | 1-14 | DOMAINES TECHNIQUES RECHERCHES (IPC) |
| A | US 11 544 871 B2 (GOOGLE LLC [US]) 3 janvier 2023 (2023-01-03) * colonne 4, ligne 49 - colonne 6, ligne 36; figures 3-5 *<br>----- | 1-14 | G06V |

Le présent rapport a été établi pour toutes les revendications

| Lieu de la recherche | Date d'achèvement de la recherche | Examinateur |
|---|---|---|
| La Haye | 27 mars 2026 | Meurisse, Wim |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 22 0220

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-03-2026

| Document brevet cité au rapport de recherche | Date de publication | Membre(s) de la famille de brevet(s) | | Date de publication |
|---|---|---|---|---|
| US 2022198682 A1 | 23-06-2022 | KR | 20220086971 A | 24-06-2022 |
| | | US | 2022198682 A1 | 23-06-2022 |
| US 2019073040 A1 | 07-03-2019 | CN | 109189223 A | 11-01-2019 |
| | | EP | 3679455 A1 | 15-07-2020 |
| | | JP | 2020537209 A | 17-12-2020 |
| | | US | 2019073040 A1 | 07-03-2019 |
| | | WO | 2019050748 A1 | 14-03-2019 |
| EP 4068150 A1 | 05-10-2022 | CN | 110991319 A | 10-04-2020 |
| | | EP | 4068150 A1 | 05-10-2022 |
| | | US | 2023252670 A1 | 10-08-2023 |
| | | WO | 2021103648 A1 | 03-06-2021 |
| EP 4465258 A1 | 20-11-2024 | CN | 118968540 A | 15-11-2024 |
| | | EP | 4465258 A1 | 20-11-2024 |
| US 11544871 B2 | 03-01-2023 | CN | 111492367 A | 04-08-2020 |
| | | CN | 118071923 A | 24-05-2024 |
| | | EP | 3724810 A1 | 21-10-2020 |
| | | KR | 20200011425 A | 03-02-2020 |
| | | US | 2019180473 A1 | 13-06-2019 |
| | | US | 2023108253 A1 | 06-04-2023 |
| | | WO | 2019118058 A1 | 20-06-2019 |

EPO FORM P0460

Pour tout renseignement concernant cette annexe : voir Journal Officiel de l'Office européen des brevets, No.12/82